# EUROPÄISCHE PATENTSCHRIFT

(11) **EP 1 861 286 B1**
(45) Veröffentlichungstag und Bekanntmachung des Hinweises auf die Patenterteilung: **24.11.2010**
(21) Anmeldenummer: 06722595.3
(22) Anmeldetag: 10.03.2006
(51) Int. Cl.: B60R 5/04

(54) **FAHRZEUG MIT EINEM ZUSÄTZLICHEN LADEGUTTRÄGER IM HECKBEREICH**
VEHICLE WITH AN ADDITIONAL CARGO CARRIER LOCATED IN THE REAR AREA
VEHICULE EQUIPE D'UN SUPPORT A MARCHANDISES SUPPLEMENTAIRE DANS LA ZONE ARRIERE

(30) Priorität: 11.03.2005 DE 102005011682
(43) Veröffentlichungstag der Anmeldung: 05.12.2007
(73) Patentinhaber: Webasto AG, 82131 Stockdorf (DE)
(72) Erfinder: LEROY, Alain, 86911 Diessen-Dettenschwang (DE); PSCHORN, Heinz, 85221 Dachau (DE); BRAUN, Robert, 82335 Berg (DE); LEGLER, Dirk, 86947 Weil (DE); KOELBL, Michael, 82061 Neuried (DE); VOGT, Olivier, 80796 München (DE); RUDOLPH, Thomas, 82229 Hechendorf (DE); JAKIMENCZUK, Thomas, 85635 Höhenkirchen (DE)
(86) Internationale Anmeldenummer: PCT/DE2006/000438
(87) Internationale Veröffentlichungsnummer: WO 2006/094497

(56) Entgegenhaltungen:
- EP-A- 1 234 754
- WO-A-03/041979
- DE-A1- 4 424 611
- DE-A1- 10 304 702
- DE-A1- 19 619 126
- GB-A- 1 123 759
- US-B1- 6 422 567

## Beschreibung

Die vorliegende Erfindung betrifft ein Fahrzeug mit einem Heckbereich, in den ein zusätzlicher Ladegutträger integriert ist, umfassend eine um eine Achse schwenkbar angeordnete Klappe, welche in einem ausgeschwenkten Zustand eine in etwa horizontale Ebene definiert.

Aus dem Stand der Technik sind Heckklappen für Fahrzeuge bekannt geworden, bei denen ein zusätzlicher Ladegutträger in die Heckklappe integriert ist. Beispielsweise beschreibt die DE 44 24 611 ein Fahrzeug mit einer Heckklappe, bei der in die Heckklappe eine weitere schwenkbare Klappe integriert ist, wobei diese Klappe in eine etwa horizontale Gebrauchsstellung herausschwenkbar ist und auf der Oberseite der herausgeklappten Klappe Mittel zur Befestigung verschiedener mitzuführender Lasten angeordnet sind, beispielsweise Profilschienen und eine Haltestange, so dass man auf der herausgeklappten Fläche Fahrräder transportieren kann. In der eingeklappten Position ist dieser Ladegutträger so in die Heckklappe integriert, dass dessen Außenseite mit dem Rahmen der Heckklappe bündig liegt. Die Heckklappe ist jedoch zweiwandig ausgeführt, wobei der eingeklappte Ladegutträger eine Außenwand bildet und zusätzlich noch eine weiter innenliegende innenwand der Heckklappe vorhanden ist, die den eigentlichen Stauraum im Inneren des Fahrzeugs nach außen hin verschließt. Es ist also nicht möglich, den Ladegutträger dazu zu benutzen, Transportgut in den Innenraum des Fahrzeugs zu schaffen, da die Heckklappe in beiden Stellungen des Ladegutträgers verschlossen bleibt.

Die DE 42 31 568 A1 beschreibt einen Gepäckhalter für Fahrzeuge, bei dem in ähnlicher Weise eine herausklappbare Klappe in die Heckklappe integriert ist. Auch hier bleibt beim Herausklappen der als zusätzlicher Ladegutträger dienenden Klappe die Heckklappe selbst geschlossen, so dass der Laderaum nicht zugänglich wird. Eine alternative Ausführungsvariante sieht vor, dass eine Stoßstangeneinheit nach hinten herausziehbar ist, wodurch das Fahrzeug verlängert und ein zusätzlicher Ladegutträger geschaffen wird.

Aus dem US-Patent 1,588,740 ist ein den Heckbereich verlängernder herausziehbarer Ladegutträger bekannt. Bei dieser Einrichtung wird eine verlängerte Ladefläche und ein zusätzlicher Laderaum im Heckbereich geschaffen. Es wird hier zunächst eine gewöhnliche Kofferraumklappe nach oben geschwenkt. Danach kann der boxartige Ladegutträger ähnlich wie eine Schublade nach außen gezogen werden, wobei eine zusätzliche abgerundete Tür vorhanden ist, die bei geschlossenem Kofferraum die Kofferraumklappe nach hinten hin verlängert. Diese zusätzliche Tür ist schwenkbar und kann nach hinten hin abgeklappt werden. Durch Einschieben der Box nach dem Beladen ist es möglich, Ladegut in den Kofferraum zu verbringen. Dieses Prinzip ist jedoch nicht ohne weiteres übertragbar auf Fahrzeuge mit einer Heckklappe, die in der Regel um eine Achse im oberen Bereich schwenkt, anders als eine Kofferraumklappe bei einem Fahrzeug mit Stufenheck. Bei dieser bekannten Lösung ist bei herausgezogenem Ladegutträger die Kofferraumklappe geöffnet und die ausgezogene Position ist in der Regel nicht für den Fahrbetrieb vorgesehen. Zudem besteht dann auch die Gefahr, dass Abgase des Fahrzeugs in den Innenraum gelangen.

Die FR 2745772-A1 beschreibt ein Fahrzeug mit einer aus einer senkrechten Schließstellung herausschwenkbaren Kofferraumklappe. Bei dem Fahrzeug handelt es sich um einen Kleinwagen. Um das Volumen des Kofferraums zu vergrößern, ist vorgesehen, dass bei ausgeschwenkter Kofferraumklappe ein zusätzlicher Gepäckraum dadurch geschaffen wird, dass man auf die ausgeschwenkte Klappe zusätzliches Ladegut aufsetzt. Um zu verhindern, dass dieses herunterfällt, ist zur Abgrenzung des Stauraums eine Anordnung aus mehreren miteinander schwenkbar verbundenen Begrenzungsplatten vorgesehen, wobei diese Anordnung durch Stangen ausgesteift wird, die am Fahrzeug befestigt werden. Die Anordnung umfasst seitliche Platten, schräg verlaufende Platten und eine mittige hintere Platte. Der so geschaffene zusätzliche Stauraum soll auch zur Unterbringung von Ladegut während der Fahrt des Fahrzeugs geeignet sein. Die Anordnung wirkt jedoch labil und improvisiert und dürfte den heutigen Anforderungen im Hinblick auf die Sicherheit im Straßenverkehr nicht entsprechen. Außerdem ist es vergleichsweise umständlich, die Anordnung in die Gebrauchsstellung zu bringen. Der zusätzlich geschaffene Laderaum auf der Klappe ist nach oben hin offen, so dass das Ladegut insoweit ungeschützt ist. Bei ausgeschwenkter Klappe ist zudem der gesamte Kofferraum offen. Die Lösung ist vorgesehen für Kleinfahrzeuge mit herkömmlichem Kofferraum, nicht jedoch für Kombifahrzeuge mit einem durch eine Heckklappe verschlossenen Laderaum, der eine Verbindung zum Innenraum des Fahrzeugs hat und somit auch das Verstauen von beispielsweise langgestrecktem Ladegut ermöglicht.

Aus der Druckschrift US 6,422,567 B1 ist ein Kraftfahrzeug bekannt, das eine zweigeteilte Heckklappe aufweist, die einen heckseitigen Laderaum des Kraftfahrzeugs verschließt bzw. freigibt und von der ein Teil um eine im Bereich eines hinteren Dachrandes angeordneten Achse nach oben verschwenkbar und ein zweiter Teil um eine im Bereich einer Ladekante eines Laderaums angeordnete Achse nach unten in eine in etwa horizontale Lage ausschwenkbar ist. In dieser horizontalen Lage kann auf den unteren, nach unten ausschwenkbaren Heckklappenteil ein Transportmodul aufgesetzt werden, das Rollen aufweist, mittels derer es in den Laderaum eingeschoben werden kann.

Aus der Druckschrift DE 44 24 611 A1 ist ein Kraftfahrzeug bekannt, das einen Heckbereich umfasst, der mit einer Heckklappe versehen ist, an der eine ausklappbare Ladeklappe ausgebildet ist. An der Innenseite der Ladeklappe, die zwischen einer eingeklappten Ruhestellung und einer ausgeklappten Transportstellung verschwenkbar ist, ist ein Fahrradträger angeordnet.

Ein Kraftfahrzeug mit den Merkmalen des Oberbegriffs des Patentanspruchs 1 ist aus der Druckschrift DE 103 04 702 A1 bekannt. Dieses Kraftfahrzeug hat eine Heckklappe, an der eine Ladeklappe ausgebildet ist, die einen zusätzlichen Ladegutträger darstellt. Die Ladeklappe definiert im ausgeschwenkten Zustand, d.h. in Transportstellung, eine in etwa horizontale Ebene. An der Innenseite der Ladeklappe können Halterungsvorrichtungen zur Befestigung eines Ladeguts oder von Transportsystemen ausgebildet sein. Die Ladeklappe soll zum Transport von Gegenständen dienen, die im Kofferraum des Fahrzeugs nur schwer verstaubar sind, wie Fährräder oder sonstige Sportgeräte.

Der vorliegenden Erfindung liegt die Aufgabe zugrunde, ein Fahrzeug mit einem Heckbereich, in den ein zusätzlicher Ladegutträger integriert ist, zur Verfügung zu stellen, bei dem ein bequemes und sicheres Transportieren unterschiedlichen zusätzlichen Ladeguts im Heckbereich ermöglicht wird, die Ladekapazität erhöht wird und auch das Be- und Entladen des erweiterten Laderaums bequem möglich ist.

Diese Aufgabe ist durch das Fahrzeug mit den Merkmalen des Patentanspruchs 1 gelöst.

Die Lösung dieser Aufgabe liefert ein erfindungsgemäßes Fahrzeug mit einem Heckbereich, in den ein zusätzlicher Ladegutträger integriert ist, gemäß der eingangs genannten Gattung mit den kennzeichnenden Merkmalen des Hauptanspruchs. Erfindungsgemäß sind mithin mindestens zwei verschiedene Transportmodule vorgesehen, die wahlweise verwendbar sind und die Mittel zur Aufnahme und/oder Befestigung von jeweils unterschiedlichem Ladegut aufweisen und auf den Ladegutträger aufsetzbar sind. Eines der Transportmodule ist ein Behältnis, das aus einem flachen zusammengeklappten Zustand zu einem boxartigen Behältnis (Pop-Up-Box) aufklappbar ist.

Die Erfindung bietet dem Benutzer somit die Möglichkeit, den Ladegutträger im Heckbereich in die ausgeschwenkte Gebrauchsstellung zu bringen und beispielsweise zusätzliches Ladegut zu transportieren, welches der Innenraum des Fahrzeugs nicht aufnimmt, beispielsweise Skis, Fahrräder oder dergleichen. Im Rahmen der Erfindung können die verschiedensten Transportmodule zur Verfügung gestellt werden, jeweils spezifisch angepasst an das zu transportierende Ladegut. Sollen loses Ladegut beziehungsweise Kleinteile transportiert werden, ist ein boxartiges Behältnis als Transportmodul besonders geeignet. Dies kann eine starre Transportbox sein oder aber auch die sogenannte Pop-Up-Box, die aus einem zusammengefalteten flachen Nichtgebrauchszustand zu einem boxartigen Behältnis aufgeklappt werden kann. Dies hat den Vorteil, dass bei Nichtgebrauch diese Faltbox im Laderaum des Fahrzeugs kaum Platz in Anspruch nimmt. Die erfindungsgemäße Lösung sieht vorzugsweise vor, dass bei ausgeschwenktem Ladegutträger über eine Trennwand zum Innenraum des Fahrzeugs hin abgedichtet wird, so dass ein Eindringen von Abgasen in den Fahrzeuginnenraum während der Fahrt verhindert wird.

Eine als boxartiges Behältnis ausgebildete Transportbox kann beispielsweise einen aufklappbaren Deckel aufweisen, so dass die Transportbox von der Oberseite her befüllt werden kann. Der Deckel kann mit einer Schließvorrichtung versehen sein, die mit der Zentralverriegelung des Fahrzeugs kombinierbar ist, so dass bei abgestelltem Fahrzeug die Transportbox gegen unbefugten Zugriff gesichert werden kann.

Gemäß einer möglichen alternativen Ausführungsvariante der Erfindung bietet ein boxartiges Behältnis, welches an der dem Fahrzeugraum zugewandten Seite hin offen ist auch die Möglichkeit, das Ladevolumen des Fahrzeugs zu vergrößern. Eine solche Transportbox kann beispielsweise bei abgestelltem Fahrzeug als Schlafbox oder dergleichen genutzt werden.

Eine weitere mögliche alternative Ausführungsvariante der Erfindung sieht vor, dass ein Transportmodul von einer äußeren Position, bei der es sich auf dem ausgeschwenkten Ladegutträger befindet, vorzugsweise entlang von Führungsmitteln in den Innenraum einschiebbar beziehungsweise aus dem Innenraum des Fahrzeugs herausziehbar ist. Diese Variante bietet zum Beispiel die Möglichkeit eines bequemeren Beladens des Innenraums, insbesondere mit schwerem Ladegut.

Eine weitere mögliche alternative Ausführungsvariante der Erfindung sieht vor, dass im Heckbereich des Fahrzeugs zwei schwenkbare Klappen übereinander angeordnet sind. Die untere Klappe dient dann als herausschwenkbarer Ladegutträger und erstreckt sich nur über einen Teil der Höhe des Fahrzeughecks. Diese untere Klappe ermöglicht ein bequemes Beladen des unteren Bereichs des Fahrzeuginnenraums. Ist dieser untere Bereich mit Ladegut gefüllt, kann über eine weitere obere schwenkbare Klappe ein separater Zugang zum Innenraum des Fahrzeugs geschaffen werden, so dass man bei geschlossener unterer Klappe verbleibenden Stauraum im oberen Bereich des Innenraums weiterhin bequem bebeziehungsweise entladen kann. Besonders günstige Verhältnisse werden geschaffen, wenn beide Klappen im entgegengesetzten Drehsinn schwenken.

Die erfindungsgemäßen Transportmodule oder eines dieser Transportmodule kann von dem Erwerber bereits mit dem Fahrzeug erworben werden. In diesem Fall ist mindestens ein Transportmodul vorzugsweise in den als schwenkbare Klappe ausgebildeten Ladegutträger bereits integriert. Es kann aber ebenso gut vorgesehen sein, dass nur der schwenkbare Ladegutträger vorhanden ist und ein oder mehrere Transportmodule als Zubehörteile erworben werden. Dabei ist es wiederum möglich, dass die Transportmodule entweder im Fahrzeug mitgeführt und bei Bedarf am Ladegutträger montiert werden können oder aber der Benutzer montiert ein entsprechendes Transportmodul über geeignete Befestigungselemente einmal am Ladegutträger und dieses ist dann stets verfügbar.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wir die vorliegende Erfindung anhand von Ausführungsbeispielen unter Bezugnahme auf die beiliegenden Zeichnungen näher beschrieben. Dabei zeigen
- Fig. 1: eine schematisch vereinfachte Ansicht eines Heckbereichs eines Fahrzeugs mit einem Ladegutträger gemäß einer ersten Variante der Erfindung,
- Fig. 2: eine ähnliche schematisch vereinfachte Ansicht des Heckbereichs eines Fahrzeugs mit einem Ladegutträger gemäß einer zweiten Variante der Erfindung,
- Fig. 3: eine ähnliche schematisch vereinfachte Ansicht des Heckbereichs eines Fahrzeugs mit einem Ladegutträger gemäß einer weiteren Variante der Erfindung,
- Fig. 4: eine weitere schematisch vereinfachte Ansicht des Heckbereichs eines Fahrzeugs mit einem Ladegutträger gemäß einer alternativen Variante der Erfindung,
- Fig. 5: eine weitere schematisch vereinfachte Ansicht des Heckbereichs eines Fahrzeugs mit einem Ladegutträger gemäß einer weiteren alternativen Variante der Erfindung.

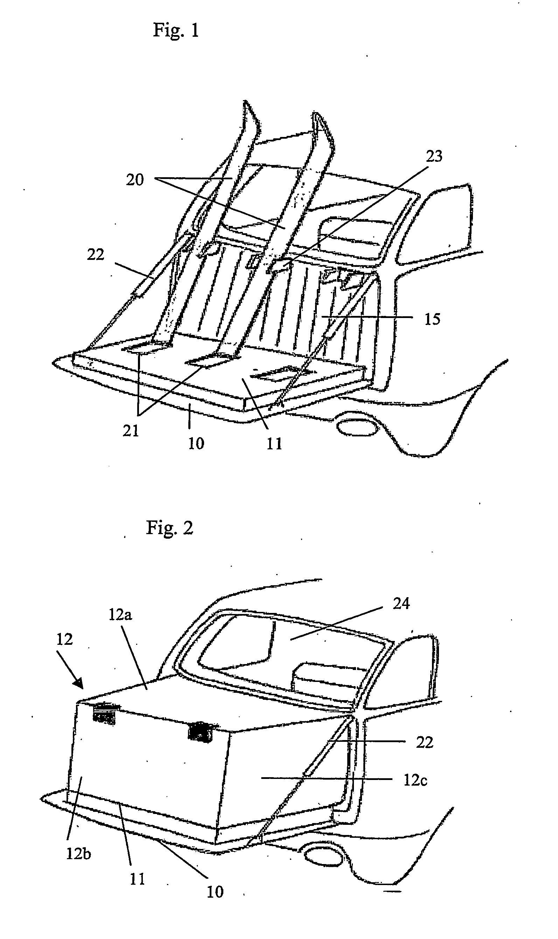

Zunächst wird auf Fig. 1 Bezug genommen. Die Darstellung zeigt in stark vereinfachter Ansicht einen Teilbereich eines Fahrzeugs, wobei hier nur der Heckbereich sowie diejenigen Teile des Fahrzeugs dargestellt sind, die zur Erläuterung der vorliegenden Erfindung von Bedeutung sind. Als Ladegutträger im Sinne der vorliegenden Erfindung dient eine im Heckbereich angeordnete um eine untere etwa horizontale Achse schwenkbare Klappe 10, die in eine etwa horizontale Gebrauchsstellung herausgeklappt werden kann, die in Fig. 1 dargestellt ist. In der gewöhnlichen Nichtgebrauchsstellung liegt die Klappe 10 vorzugsweise in etwa bündig mit dem angrenzenden Bereich der Karosserie des Fahrzeughecks. Gemäß einer bevorzugten Variante der Erfindung können Arretiermittel 22 vorgesehen sein, die dafür sorgen, dass die Klappe 10 in der in Fig. 1 dargestellten etwa horizontalen Gebrauchsstellung arretiert wird. Diese Arretiermittel 22 können gleichzeitig als Federspeicher wirken und dazu dienen, das Einschwenken der Klappe 10 in die Nichtgebrauchsstellung zu erleichtern. Beispielsweise kann man dazu als Arretiermittel 22 Gasdruckfedern oder andere Federelemente verwenden.

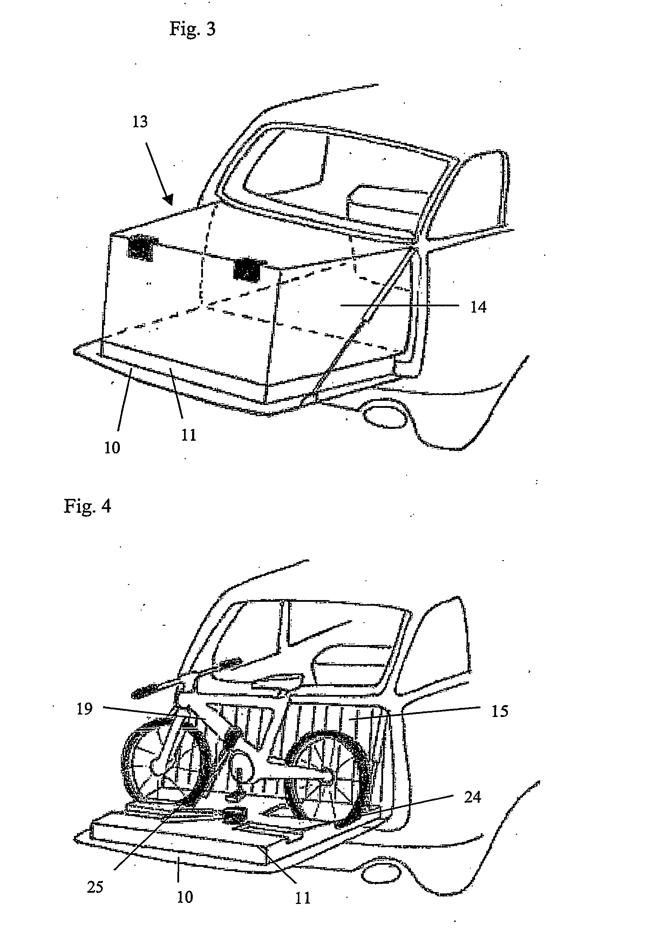

Wie die Gebrauchsstellung gemäß Fig. 1 zeigt, dient die ausgeschwenkte Klappe 10 als Ladegutträger, wobei ein Transportmodul 11 vorgesehen ist, welches entweder als integraler Bestandteil der Klappe bereits im Fahrzeug vorhanden sein kann oder aber ein solches Transportmodul 11 wird vom Fahrzeugeigner gegebenenfalls nachträglich erworben und kann auf den Ladegutträger 10 aufgesetzt und an diesem befestigt werden. Dazu dienen entsprechende Befestigungsmittel, die in Fig.1 nicht dargestellt sind. Erfindungsgemäß besteht der Vorteil, dass das Transportmodul 11 jeweils Mittel aufweist, die zur Aufnahme und/oder Befestigung bestimmter Transportgüter spezifisch ausgebildet sind. Dies bedeutet, in dem Ausführungsbeispiel gemäß Fig. 1 handelt es sich um ein etwa plattenförmiges vergleichsweise flaches Transportmodul 11, an dem oberseitig (sichtseitig) Vertiefungen 21 oder Aufnahmen ausgebildet sind, in die man beispielsweise Skis 20 für den Transport einstellen kann. An anderer Stelle, beispielsweise an einer Rahmenstrebe des Fahrzeughecks sind weiterhin Halterungen 23 angeordnet, die beispielsweise als Klemmvorrichtungen ausgebildet sind, so dass man die in die Aufnahmen 21 eingestellten Skis 20 in diesen Halterungen festlegen kann. Die erfindungsgemäße Idee sieht vor, dass das Transportmodul 11 gegebenenfalls ausgewechselt werden kann, so dass der Benutzer auch ein anderes Transportmodul auf den klappenförmigen Ladegutträger 10 aufsetzen kann, um anderes Ladegut zu transportieren, beispielsweise Fahrräder, sowie dies in der Ausführungsvariante gemäß Fig. 4 gezeigt ist.

Fig. 4 zeigt eine ähnliche Ausführungsvariante wie in Fig. 1, bei der ebenfalls ein klappenförmiger Ladegutträger 10 vorgesehen ist, auf dem sich ein verhältnismäßig flaches plattenartiges Transportmodul 11 befindet, welches entweder integraler Bestandteil des Ladegutträgers 10 ist oder als Zusatzbauteil erworben werden und an dem Ladegutträger 10 befestigt werden kann. Das Transportmodul 11 ist also im letztgenannten Fall austauschbar. Das für den Transport von Fahrrädern 19 vorgesehene Transportmodul 11 gemäß Fig. 4 verfügt über entsprechend angepasste Aufnahmen 24, die sich in diesem Fall in Querrichtung des Fahrzeugs erstrecken, wobei vorzugsweise jeweils in einer Reihe mindestens je zwei solcher Aufnahmen 24 angeordnet sind, so dass man wie die Darstellung gemäß Fig. 4 zeigt, jeweils das Hinterrad beziehungsweise das Vorderrad eines Fahrrads 19 dort einstellen kann. Vorzugsweise sind mehrere solcher Reihen mit je zwei Aufnahmen 24 vorhanden, so dass mehrere Fahrräder 19 auf dem Transportmodul 11 abgestellt werden können. Vorzugsweise sind weiterhin zusätzlich.

Befestigungseinrichtungen in Form von Halterungselementen 25 vorgesehen, die eine sichere Festlegung der Fahrräder 19 während der Fahrt ermöglichen. Diese Halterungselemente 25 können sich beispielsweise an dem Transportmodul 11 befinden und aus einer flachen Nichtgebrauchsstellung in die in Fig. 4 gezeigte Gebrauchsstellung durch Schwenken hochgeklappt werden.

Im übrigen ist bei den beiden Ausführungsvarianten gemäß den Fig. 1 und 4 vorzugsweise vorgesehen, dass eine Abtrennung 15 den Zugang zum Innenraum des Fahrzeugs, insbesondere zum Ladebereich beispielsweise eines Kombifahrzeugs, so abtrennt, dass eine Dichtigkeit gegeben ist, die ein Eindringen von Fahrzeugabgasen in den Innenraum des Fahrzeugs verhindert. Dadurch ist gewährleistet, dass in der ausgeklappten Stellung des Ladegutträgers 10 gefahren werden kann, ohne dass Abgase in das Fahrzeug eindringen. Dabei ist es vorzugsweise so, dass die Abtrennung 15 nicht unbedingt eine starre Trennwand ist, sondern zum Beispiel ein abdichtender Filmvorhang oder eine schwenkbare oder herausnehmbare Trennwand, so dass der Zugang zum Laderaum des Fahrzeugs für das Beladen mit anderem Ladegut bei heraus geschwenktem Ladegutträger 10 gleichwohl gegeben ist.

Der Vorteil bei der erfindungsgemäßen Lösung gemäß der Variante nach den Figuren 1 und 4 besteht somit darin, dass der Fahrzeugeigner ein Fahrzeug hat, bei dem die herkömmlichen Ladefunktionen beispielsweise eines Kombifahrzeugs mit Heckbeladung erhalten und der Laderaum vollständig verfügbar ist, wobei der Laderaum über das Öffnen der auch als Ladegutträger 10 dienenden schwenkbaren Klappe zugänglich ist. Darüber hinaus hat der Benutzer aber auch die Möglichkeit, spezifisches Ladegut zu transportieren, wenn er den Ladegutträger 10 in die etwa horizontale Gebrauchsstellung herausschwenkt und ein entsprechendes Transportmodul 11 verwendet, welches für das jeweilige Transportgut spezifisch angepasst ist und entsprechende Befestigungselemente und Halterungen aufweist. Er kann also mit herausgeklapptem Ladegutträger 10 fahren und aufgrund der abdichtenden Trennwand 15 können dabei die Abgase nicht in das Fahrzeuginnere gelangen. Dennoch hat der Benutzer nicht den bei herkömmlichen Lösungen gegebenen Nachteil, dass sich anstelle der Trennwand 15 eine starre geschlossene Wand befindet, die quasi Bestandteil der Karosserie ist und damit ein Beladen des übrigen Laderaums im Innenraum des Fahrzeugs verhindern würde. Anders als bei herkömmlichen Fahrzeugen mit Stufenheck und Kofferraum bleibt bei der erfindungsgemäßen Lösung auch die Möglichkeit erhalten, langgestrecktes Ladegut durch die zum Beispiel als flexibler Filmvorhang ausgebildete Trennwand hindurch oder nach Entfernen der Trennwand 15 vom Heck her in den Innenraum des Fahrzeugs zu schieben.

Nachfolgend wird auf Fig. 2 Bezug genommen, die eine alternative Variante der erfindungsgemäßen Lösung zeigt. Auch hier ist wiederum der klappenartig ausschwenkbare Ladegutträger 10 vorhanden, der in eine etwa horizontale Gebrauchsstellung herausschwenkbar ist, in der er von den Arretiermitteln 22 gehalten wird. Auf den Ladegutträger 10 kann entweder unmittelbar ein als Transportbox ausgebildetes Transportmodul 12 aufgesetzt werden, welches an dem Ladegutträger befestigt wird. Es kann aber auch vorgesehen sein, dass sich an dem Ladegutträger 10 bereits ein flaches Transportmodul 11 befindet, welches plattenförmig und vergleichsweise flach ausgebildet ist, ähnlich wie in den Ausführungsbeispielen gemäß Fig. 1 und 4. Im letztgenannten Fall wird also das boxartige Behältnis 12 auf ein flaches Transportmodul 11 aufgesetzt, so dass es auch möglich ist, nach Abnahme der Transportbox 12 anderes Ladegut zu transportieren, welches an dem flachen plattenförmigen Transportmodul 11 befestigt wird (siehe Fig. 1 und Fig. 4).

Die in Fig. 2 dargestellte Transportbox 12 bildet vorzugsweise ein geschlossenes quaderförmiges Behältnis mit Seitenwänden 12c, einer Rückwand 12b, die in Querrichtung des Fahrzeugs verläuft sowie einem Deckel 12a, der die Transportbox 12 nach oben hin verschließt, wobei der Deckel vorzugsweise durch Schwenken um eine Achse geöffnet werden kann. Dazu können beispielsweise Scharniere 23 vorhanden sein, wie in Fig. 2 gezeigt. Es ist aber auch möglich, dass sich die Schwenkachse des Deckels an der dem Fahrzeug zugewandten Seite befindet und stattdessen Schlösser 23 vorgesehen sind, nach deren Öffnen der Deckel 12a durch Schwenken im Uhrzeigersinn in der Zeichnung geöffnet werden kann. Der Vorteil bei dieser Lösungsvariante liegt darin, dass der Benutzer mit der Transportbox 12 ein vergleichsweise großes Transportbehältnis hat mit großem Ladevolumen. Es kann sich um eine starre Box handeln, die beispielsweise bei Nichtgebrauch im Fahrzeug mitgeführt wird. Stattdessen kann aber auch gemäß einer bevorzugen Variante die Transportbox 12 als eine Art Pop-Up-Box ausgebildet sein, die in einem flachen Nichtgebrauchszustand vorliegt und entsprechende Faltwände hat und durch Hochziehen in die in Fig. 2 dargestellte Gebrauchsstellung gebracht wird, in der sie durch hier nicht dargestellte Aussteifungselemente gegebenenfalls stabilisiert wird. Bei der Variante gemäß Fig. 2 ist es vorzugsweise so, dass die Transportbox 12 durch eine entsprechende Rückwand zum Fahrzeuginnenraum hin geschlossen ist, so dass Abgase nicht in den Innenraum gelangen können und der Benutzer mit der auf dem Ladegutträger 10 angebrachten Transportbox 12 problemlos fahren kann. Es kann aber auch vorgesehen sein, dass sich hinter der Transportbox 12 eine flexible oder entfernbare Trennwand 15 der in den Ausführungsbeispielen nach Fig. 1 und Fig. 4 gezeigten Art befindet, so dass eine Abdichtung zum Fahrzeuginnenraum auch dann gegeben ist, wenn die Transportbox 12 keine Rückwand aufweist.

Eine weitere alternative Ausführungsvariante einer ähnlichen Transportbox, die mit dem Bezugszeichen 13 bezeichnet ist, ist in dem Ausführungsbeispiel gemäß Fig. 3 dargestellt. Bei dieser Variante hat die Transportbox bewusst keine Rückwand, so dass sie an der dem Innenraum 14 zugewandten Seite offen ist. Auch bei dieser Variante wird die Transportbox auf den Ladegutträger 12 oder auf ein darauf befindliches Transportmodul 11 aufgesetzt oder aber die Transportbox 12 ist eine Faltbox oder Pop-Up-box, die quasi in ein Transportmodul 11 auf dem Ladegutträger 10 integriert ist und durch Auffalten in die in Fig. 3 gezeigte Gebrauchsstellung gebracht werden kann. Bei der letztgenannten Variante kann die Transportbox 13 von dem Benutzer stets mitgeführt werden und gegebenenfalls bereits Bestandteil des erworbenen Fahrzeugs sein. Der Benutzer klappt dann zunächst den im Heckbereich des Fahrzeugs angeordneten klappenförmigen Ladegutträger 10 aus und faltet dann die in dem Transportmodul 11 befindliche Faltbox 13 auf und fixiert diese in der aufgefalteten Gebrauchsstellung durch hier nicht dargestellte Fixierelemente oder Aussteifungselemente, beispielsweise Stangen. Die in Fig. 3 gezeigte Variante kann während der Fahrt des Fahrzeugs genutzt werden, um einen vergrößerten Laderaum zu schaffen, da hier eine Verbindung zwischen dem Innenraum beispielsweise eine Kombifahrzeugs und dem durch die Transportbox 13 gebildeten zusätzlichen Ladevolumen besteht. Das Fahrzeug kann also beispielsweise auch von der Innenseite her beladen werden. Dies setzt lediglich voraus, dass die Transportbox 13 für den Transport der darin aufgenommenen Gegenstände ausreichend stabil ausgebildet ist. Es kann aber alternativ dazu auch vorgesehen sein, die beispielsweise als Faltbox ausgebildete Transportbox 13 bei abgestelltem Fahrzeug zum Beispiel als Schlafbox zu benutzen, da sich durch die Transportbox 13 eine verlängerte Liegefläche ergibt. Dazu liegt die Bodenfläche im Innenraum der Box 13 vorzugsweise etwa in der Ebene der Bodenfläche im Innenraum des Fahrzeugs, so dass sich eine etwa um die Länge des Ladegutträgers 10 verlängerte Liegefläche schaffen lässt.

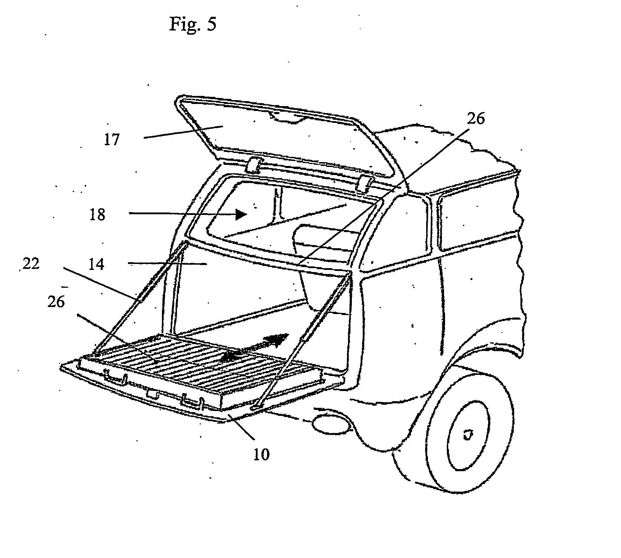

Nachfolgend wird unter Bezugnahme auf Fig. 5 eine weitere alternative Ausführungsvariante der Erfindung näher erläutert. Bei dieser Variante ist wiederum ein klappenförmig ausgebildeter Ladegutträger 10 um eine Achse schwenkbar im Heckbereich des Fahrzeugs angeordnet, wobei Fig. 5 die ausgeklappte Gebrauchsstellung zeigt. Auch hier sind vorzugsweise Arretiermittel 22 vorhanden, um den Ladegutträger 10 in der ausgeklappten Gebrauchsstellung zu halten. Auf dem Ladegutträger befindet sich ein vergleichsweise flaches Transportmodul 16, welches bei dieser Ausführungsvariante jedoch nicht ortsfest auf dem Ladegutträger 10 festgelegt ist, sondern welches in Fahrzeuglängsrichtung entsprechend der eingezeichneten Pfeile verschiebbar angeordnet ist. Dies bedeutet, man kann das Transportmodul 16 aus der in Fig. 5 dargestellten Position, in der es sich auf dem Ladegutträger 10 außerhalb des Fahrzeugs befindet, in Pfeilrichtung in den Innenraum (Laderaum) des Fahrzeugs hineinschieben. Dies ist beispielsweise vorteilhaft, wenn man Ladegut auf das Transportmodul 16 auflegt, welches vergleichsweise schwer oder sperrig ist. In diesem Fall dient das Transportmodul 16 als Ladehilfe und vereinfacht es, Ladegut in den Innenraum 14 durch die bei geöffneter Klappe 10 vorhandene Öffnung zu verbringen. Umgekehrt kann man natürlich auch das Transportmodul 16 dazu nutzen, auf diesem abgelegtes Ladegut aus dem Inneren des Fahrzeugs zu entladen. Dazu kann das Transportmodul 16 mit darauf befindlichem Ladegut in Pfeilrichtung aus dem Innenraum des Fahrzeugs nach außen auf den Ladegutträger 10 geschoben und dann das Ladegut von außen her entladen werden. Bei dem Transportmodul 16 kann es sich beispielsweise auch um eine in Fig. 5 in einer flachgelegten Position dargestellte Transportbox handeln, die sich ähnlich wie die zuvor anhand der Ausführungsbeispiele von Fig. 2 und 3 beschriebene Pop-Up-Box aus dem flachen Zustand auffalten lässt. Dadurch entsteht eine Transportbox, die ebenfalls aus dem Inneren des Fahrzeugs nach außen beziehungsweise von der Position auf dem Ladegutträger 10 in das Innere des Fahrzeugs geschoben werden kann.

Das Ausführungsbeispiel gemäß Fig. 5 zeigt noch eine weitere alternative Variante der Erfindung. Wie man sieht ist oberhalb des klappenförmigen Ladegutträgers 10 eine weitere schwenkbare Klappe 17 angeordnet. Diese Klappe 17 ist um eine im oberen Heckbereich angeordnete vorzugsweise horizontale Schwenkachse schwenkbar ausgebildet, wobei diese Klappe 17 in dem in Fig. 5 dargestellten geöffneten Zustand eine weitere Ladeöffnung 18 verschließt. Bei dieser Ausführungsvariante umfasst die Klappe 17 beispielsweise auch die Heckscheibe des Fahrzeugs. Unter der Klappe 17 liegt die Öffnung 18, was den Vorteil hat, dass eine zusätzliche obere Ladeöffnung 18 geschaffen wird, die ein bequemes Beladen von beispielsweise weiterem Ladegut auch dann ermöglicht, wenn bereits der untere Laderaum 14 soweit mit Ladegut gefüllt ist, dass die Öffnung hinter der Klappe 10 zum unteren Laderaum nicht mehr zugänglich ist. Durch die zusätzliche Öffnung 18 kann man beispielsweise auch langgestrecktes Ladegut in den Innenraum eines bereits beladenen Kombifahrzeugs laden.

Wie man aus Fig. 5 erkennt, ist der Heckbereich des Fahrzeugs quasi geteilt, so dass sich zwei separate Ladeöffnungen 18, 14 ergeben, die beispielsweise durch eine etwa horizontal verlaufende Rahmenstrebe 26 voneinander getrennt sind. Die obere Öffnung 18 wird durch die schwenkbare Klappe 17 verschlossen. Die untere Öffnung wird durch den als schwenkbare Klappe ausgebildeten Ladegutträger 10 verschlossen. Der Ladegutträger 10 bildet also eine schwenkbare Klappe, die sich nur über einen Teil der Höhe des Heckbereichs bis zur Rahmenstrebe 26 hin erstreckt. Vorzugsweise sind die Schwenkachsen beider Klappen 10, 17 so angeordnet, dass die Klappen zum Öffnen jeweils im entgegengesetzten Drehsinn schwenken. Vorteilhaft ist es, wenn die Schwenkachse der oberen Klappe 17 im Bereich einer oberen Rahmenquerstrebe liegt und die untere Schwenkachse für den Ladegutträger 10 etwa oberhalb der Stoßstange oder der Heckschürze verläuft. Die Variante gemäß Fig. 5 ist auch dann vorteilhaft, wenn das Transportmodul 16 als aufklappbare Transportbox ausgebildet ist oder wenn eine Transportbox 12, 13 gemäß den Ausführungsbeispielen der Fig. 2 oder 3 vorgesehen ist. Auch in diesen Fällen hat der Benutzer über eine Klappe 17 der in Fig. 5 gezeigten Art die Möglichkeit, über eine weitere Ladeöffnung 18 den Innenraum des Fahrzeugs zu beladen. Die in den verschiedenen Ausführungsbeispielen gemäß den Fig. 1 bis 5 gezeigten Varianten der Erfindung können also auch sinnvoll miteinander kombiniert werden. Das Ladekonzept bei diesen Fahrzeugen ist sehr variabel. Die jeweiligen Transportmodule können entweder mit dem Fahrzeug erworben oder anschließend als separate Teile gekauft und am Fahrzeug angebracht beziehungsweise auf den Ladegutträger aufgesetzt werden. Zur Befestigung der jeweiligen Transportmodule können die vorhandenen Schlösser des Fahrzeugs benutzt werden, insbesondere das Schloss, um den als schwenkbare Klappe ausgebildeten Ladegutträger 10 zu verschließen. Ist eine zusätzliche Klappe 17 der in Fig. 5 gezeigten Art vorhanden, ist für diese ebenfalls in der Regel ein eigenes Schloss vorgesehen. Die Schlösser für die Klappen 17 beziehungsweise den klappenförmigen Ladegutträger 10 sind sinnvoller Weise über die Zentralverriegelung des Fahrzeugs bedienbar, so dass die Betätigung beispielsweise über einen Funkschlüssel erfolgen kann. Die Transportmodule 11, 12, 13, 16 können über die für die Klappen 10, 17 vorgesehenen Schlösser so befestigt werden, dass ein unbefugtes Entfernen verhindert wird.

### Bezugszeichenliste

- 10: Klappe
- 11: Transportmodul
- 12: Transportbox
- 12a: Deckel
- 12b: Rückwand
- 12c: Seitenwände
- 13: Transportbox
- 14: Innenraum
- 15: Abtrennung
- 16: Transportmodul
- 17: Klappe
- 18: Ladeöffnung
- 19: Fahrräder
- 20: Skis
- 21: Vertiefungen
- 22: Arretiermittel
- 23: Halterungen
- 24: Aufnahmen
- 25: Halterungselemente
- 26: Rahmenstrebe

## Patentansprüche

1. Fahrzeug mit einem Heckbereich, in den ein zusätzlicher Ladegutträger integriert ist, umfassend eine um eine Achse schwenkbar angeordnete Klappe, welche in einem ausgeschwenkten Zustand eine in etwa horizontale Ebene definiert, wobei mindestens zwei verschiedene Transportmodule (11) vorgesehen sind, die wahlweise verwendbar sind und die Mittel zur Aufnahme und/oder Befestigung von jeweils unterschiedlichem Ladegut aufweisen und auf den Ladegutträger (10) aufsetzbar sind, **dadurch gekennzeichnet, dass** eines der Transportmodule ein Behältnis ist, welches aus einem flachen zusammengeklappten Zustand zu einem boxartigen Behältnis (Pop-Up-Box) aufklappbar ist.

2. Fahrzeug mit einem Heckbereich nach Anspruch 1, **dadurch gekennzeichnet, dass** eines der Transportmodule (11) Mittel zur Aufnahme und/oder Befestigung von Fahrrädern aufweist.

3. Fahrzeug mit einem Heckbereich nach Anspruch 1, **dadurch gekennzeichnet, dass** eines der Transportmodule (11) Mittel zur Aufnahme und/oder Befestigung von Skis aufweist.

4. Fahrzeug mit einem Heckbereich nach Anspruch 1, **dadurch gekennzeichnet, dass** eines der Transportmodule (12) ein boxartiges Behältnis ist, welches an allen Seiten und auch oberseitig geschlossen beziehungsweise verschließbar ist und/oder welches eine rückseitige zum Fahrzeuginnenraum hin abdichtende Trennwand aufweist.

5. Fahrzeug mit einem Heckbereich nach Anspruch 4, **dadurch gekennzeichnet, dass** das boxartige Behältnis (12) einen aufklappbaren Deckel (12a) aufweist.

6. Fahrzeug mit einem Heckbereich nach Anspruch 4, **dadurch gekennzeichnet, dass** das boxartige Behältnis (13) seitlich und oberseitig geschlossen beziehungsweise verschließbar ist und an der dem Fahrzeugraum zugewandten Seite (14) offen ist und somit ein den Fahrzeuginnenraum über die Länge des Fahrzeugs hinaus vergrößerndes zum Außenraum hin geschlossenes Ladevolumen bildet.

7. Fahrzeug nach Anspruch 1 oder 2, **dadurch gekennzeichnet, dass** bei einem der auf den ausgeschwenkten Ladegutträger (10) aufgesetztem Transportmodul (11) eine zum Innenraum des Fahrzeugs hin abdichtende Trennwand (15) vorgesehen ist.

8. Fahrzeug mit einem Heckbereich nach einem der Ansprüche 1 bis 7, **dadurch gekennzeichnet, dass** ein auf den ausgeschwenkten Ladegutträger (10) aufgesetztes Transportmodul (16) vorzugsweise entlang von Führungsmitteln in den Innenraum (14) einschiebbar beziehungsweise aus diesem herausziehbar ist.

9. Fahrzeug mit einem Heckbereich nach einem der Ansprüche 1 bis 8, **dadurch gekennzeichnet, dass** sich der als schwenkbare Klappe ausgebildete Ladegutträger (10) nur über einen Teil der Höhe des Fahrzeughecks erstreckt und eine weitere über dem Ladegutträger im oberen Bereich des Hecks angeordnete schwenkbare Klappe (17) vorgesehen ist, die eine Öffnung (18) mit separatem Zugang zum Innenraum (14) des Fahrzeugs verschließt.

10. Fahrzeug mit einem Heckbereich nach Anspruch 9, **dadurch gekennzeichnet, dass** die obere Klappe (17) um eine obere Schwenkachse in zu der den Ladegutträger bildenden Klappe (10) entgegengesetztem Drehsinn in die Öffnungsstellung schwenkt.

11. Fahrzeug mit einem Heckbereich nach einem der Ansprüche 1 bis 10, **dadurch gekennzeichnet, dass** am Ladegutträger (10) und/oder am Transportmodul (11) Befestigungselemente zur Befestigung des Transportmoduls vorgesehen sind.

## Claims

1. Vehicle having a rear region into which an additional cargo carrier is integrated, comprising a flap which is arranged so as to be pivotable about an axis and which, in a pivoted-out state, defines an approximately horizontal plane, with at least two different transport modules (11) being provided which can be used selectively and which have means for holding and/or fastening in each case different cargo and which can be mounted on the cargo carrier (10), **characterized in that** one of the transport modules is a container which can be unfolded from a flat, folded-together state into the form of a box-shaped container (pop-up box).

2. Vehicle having a rear region according to Claim 1, **characterized in that** one of the transport modules (11) has means for holding and/or fastening bicycles.

3. Vehicle having a rear region according to Claim 1, **characterized in that** one of the transport modules (11) has means for holding and/or fastening skis.

4. Vehicle having a rear region according to Claim 1, **characterized in that** one of the transport modules (12) is a box-shaped container which is or can be closed off on all sides and also on the top and/or which has a rear-side partition which provides sealing with respect to the vehicle interior space.

5. Vehicle having a rear region according to Claim 4, **characterized in that** the box-shaped container (12) has a lid (12a) which can be pivoted up.

6. Vehicle having a rear region according to Claim 4, **characterized in that** the box-shaped container (13) is or can be closed off on the sides and on the top and is open on that side (14) which faces towards the vehicle interior, and said box-shaped container therefore forms a loading volume which increases the vehicle interior space beyond the length of the vehicle and which is closed off to the outside.

7. Vehicle according to Claim 1 or 2, **characterized in that**, when a transport module (11) is mounted on the pivoted-out cargo carrier (10), a partition (15) which provides sealing with respect to the interior space of the vehicle is provided.

8. Vehicle having a rear region according to one of Claims 1 to 7, **characterized in that** a transport module (16) which is mounted on the pivoted-out cargo carrier (10) can preferably be slid into and out of the interior space (14) along guide means.

9. Vehicle having a rear region according to one of Claims 1 to 8, **characterized in that** the cargo carrier (10), which is designed as a pivotable flap, extends only over a part of the height of the vehicle rear end, and a further pivotable flap (17) is provided which is arranged above the cargo carrier in the upper region of the rear end and which closes off an opening (18) with separate access to the interior space (14) of the vehicle.

10. Vehicle having a rear region according to Claim 9, **characterized in that** the upper flap (17) pivots into the open position about an upper pivot axis in the opposite direction of rotation to the flap (10) which forms the cargo carrier.

11. Vehicle having a rear region according to one of Claims 1 to 10, **characterized in that** fastening elements for fastening the transport module are provided on the cargo carrier (10) and/or on the transport module (11).

## Revendications

1. Véhicule équipé d'une zone arrière dans laquelle un support à marchandises supplémentaire est intégré, comprenant un rabat disposé de façon pivotante autour d'un axe qui définit dans un état pivoté vers l'extérieur un plan approximativement horizontal, au moins deux modules de transport (11) différents étant prévus qui peuvent être utilisés au choix et qui comportent des moyens pour loger et/ou fixer des marchandises respectivement différentes et peuvent être placés sur le support à marchandises (10), **caractérisé en ce qu'**un des modules de transport est un récipient pouvant être déplié d'un état replié à plat pour former un récipient de type boîte (boîte éclair, pop-up box en anglais).

2. Véhicule équipé d'une zone arrière selon la revendication 1, **caractérisé en ce qu'**un des modules de transport (11) comporte des moyens pour loger et/ou fixer des bicyclettes.

3. Véhicule équipé d'une zone arrière selon la revendication 1, **caractérisé en ce qu'**un des modules de transport (11) comporte des moyens pour loger et/ou fixer des skis.

4. Véhicule équipé d'une zone arrière selon la revendication 1, **caractérisé en ce qu'**un des modules de transport (12) est un récipient de type boîte fermé et/ou pouvant être fermé de tous les côtés, y compris sur le dessus, et/ou qui comporte une paroi de séparation arrière pouvant être étanchéifiée par rapport à l'espace intérieur du véhicule.

5. Véhicule équipé d'une zone arrière selon la revendication 4, **caractérisé en ce que** le récipient (12) de type boîte comporte un couvercle (12a) rabattable par en haut.

6. Véhicule équipé d'une zone arrière selon la revendication 4, **caractérisé en ce que** le récipient (13) de type boîte est fermé et/ou peut être fermé en côté et sur le dessus et est ouvert au niveau du côté (14) orienté vers l'habitacle du véhicule, formant ainsi un volume de chargement fermé en direction de l'espace intérieur et agrandissant vers l'extérieur l'espace intérieur du véhicule sur l'ensemble de la longueur du véhicule.

7. Véhicule selon la revendication 1 ou 2, **caractérisé en ce qu'**une paroi de séparation (15) étanchéifiée par rapport à l'espace intérieur du véhicule est prévue pour un module de transport (11) placé sur le support à marchandises (10) pivoté vers l'extérieur.

8. Véhicule équipé d'une zone arrière selon l'une quelconque des revendications 1 à 7, **caractérisé en ce qu'**un module de transport (16) placé sur le support à marchandises (10) pivoté vers l'extérieur est de préférence tiré dans l'espace intérieur (14) et/ou sorti de celui-ci le long des moyens de guidage.

9. Véhicule équipé d'une zone arrière selon l'une quelconque des revendications 1 à 8, **caractérisé en ce que** le support à marchandises (10) réalisé sous la forme d'un rabat pivotant ne s'étend que sur une partie de la hauteur de l'arrière du véhicule et qu'un autre rabat (17) pivotant disposé dans la zone supérieure de l'arrière au-dessus du support à marchandises est prévu qui ferme une ouverture (18) avec accès séparé par rapport à l'espace intérieur (14) du véhicule.

10. Véhicule équipé d'une zone arrière selon la revendication 9, **caractérisé en ce que** le rabat (17) supérieur pivote autour d'un axe de pivotement supérieur dans un sens de rotation opposé à celui du rabat (10) formant le support à marchandises dans la position d'ouverture.

11. Véhicule équipé d'une zone arrière selon l'une quelconque des revendications 1 à 10, **caractérisé en ce que** des éléments de fixation sont prévus au niveau du support à marchandises (10) et/ou au niveau du module de transport (11) pour fixer le module de transport.
